Europäisches Patentamt

European Patent Office

Office européen des brevets

(19)

(11) Veröffentlichungsnummer: **0 007 437**
**B1**

(12) **EUROPÄISCHE PATENTSCHRIFT**

(45) Veröffentlichungstag der Patentschrift: **23.06.82**

(21) Anmeldenummer: **79102036.5**

(22) Anmeldetag: **20.06.79**

(51) Int. Cl.³: **C 08 J 9/00, C 08 L 69/00, C 08 L 55/02**

(54) Verfahren zur Herstellung eines Treibmittelkonzentrates.

(30) Priorität: **03.07.78 US 921529**

(43) Veröffentlichungstag der Anmeldung:
**06.02.80 Patentblatt 80/03**

(45) Bekanntmachung des Hinweises auf die Patenterteilung:
**23.06.82 Patentblatt 82/25**

(84) Benannte Vertragsstaaten:
**DE FR GB IT NL**

(56) Entgegenhaltungen:
DE - A - 2 334 808
DE - A - 2 608 925
DE - A - 2 725 100
DE - B - 2 118 238
US - A - 3 725 321
US - A - 3 779 954
US - A - 3 781 233
US - A - 3 803 060
US - A - 3 873 477
US - A - 3 888 802
US - A - 3 925 270

(73) Patentinhaber: **Mobay Chemical Corporation**
**Penn Lincoln Parkway West**
**Pittsburgh, Pennsylvania 15205 (US)**

(72) Erfinder: **Lim, In Choon**
**1420 Centre Avenue (Apartment No. 701)**
**Pittsburgh, Pennsylvania (US)**

(74) Vertreter: **Müller, Heinz-Gerd, Dipl.-Ing. et al,**
**c/o Bayer AG Zentralbereich Patente Marken und**
**Lizenzen**
**D-5090 Leverkusen 1, Bayerwerk (DE)**

Courier Press, Leamington Spa, England.

Verfahren zur Herstellung eines Treibmittelkonzentrates

Die Herstellung von Treibmittelkonzentraten aus Granulaten ist bekannt (s. US—A 3 873 477, 3 925 270, 3 888 802, 3 725 321, 3 781 233, 3 799 954, 3 803,060). Nachteilig für diese Herstellungsverfahren ist jedoch, daß für eine gute Homogenisierung der Konzentrate entweder zu hohe Temperaturen notwendig sind oder daß bei tieferen Temperaturen, wo noch eine schonende Einarbeitung der Treibmittel selbst möglich ist, keine ausreichende Homogenisierung erreicht wird.

Darüber hinaus ist bekannt, Treibmittelkonzentrate herzustellen, bei denen der Thermoplast auch in Pulverform eingesetzt wird. So sind z.B. in DE—A 26 08 925 bzw. 27 25 100 Konzentrate beschrieben, die hergestellt werden auf Basis eines thermoplastischen Polyesters mit einem definierten kristallinen Schmelzpunkt.

Nachteilig ist, das dieses Verfahren nur auf Polymere mit einem definierten kristallinen Schmelzpunkt beschränkt ist und auf amorphe Thermoplaste ohne einen definierten kristallinen Schmelzpunkt nicht übertragbar ist, also nicht auf die erfindungsgemäß einzusetzenden aromatischen thermoplastischen Polycarbonate und ABS-Polymerisate. In der DE—A 26 08 925 wird auch dargelegt, daß der Einsatz von Treibmittelkonzentraten, die durch Verwendung eines unter der Zersetzungstemperatur des Treibmittels in plastischem Zustand zu verarbeitenden Polymeren, wie Polystyrol oder Polyolefine, hergestellt sind, zur Herstellung von Strukturschaumformteilen aus hochmolekularen Polyalkylenterephthalaten nicht geeignet ist (DE—A 2 608 925, Seiten 8/9, sowie Vergleichsbeispiel 3).

Geeignete Stoffe für Treibmittelkonzentrate sind deshalb gemäß DE—A 2 608 925 spezielle gesättigte Polyester oder Copolyester mit einem Kristallschmelzpunkt von 140°C und 220°C.

Germäß DE—A 2 608 925, Seite 14, Absatz 2, kann zur Herstellung des Treibmittelkonzentrats der spezielle Polyester als Granulat oder als Pulver eingesetzt werden.

Gemäß DE—A 2 608 925, Seite 16, Absatz 3, eignen sich diese Treibmittelkonzentrate besonders gut zur Herstellung von Strukturschaumformteilen aus hochmolekularen Polyalkylenterephthalaten die zu verschäumenden Polyalkylenterephthalate werden dabei als Granulate eingesetzt (Siehe Seite 20, letzter Absatz der DE—A 2 608 925 und deren Beispiele).

Dagegen lehrt die vorliegende Erfindung, daß bei der Herstellung von Treibmittelkonzentraten aus Polycarbonaten oder ABS-Polymerisaten geringe Mengen eines artfremden Stoffes, nämlich Polyethylen oder Polycaprolacton verwendet werden, was allerdings nur zu guten Treibmittelkonzentraten führt, in denen das Treibmittel noch vollständig erhalten und homogen verteilt ist, wenn zusätzlich die hochmolekularen Polycarbonate bzw. ABS-Polymerisate in Pulverform eingesetzt werden. Diese Lehre war aus der DE—A 2 608 925 nicht abzuleiten.

Gegenstand der vorliegenden Erfindung ist somit ein Verfahren zur Herstellung von Treibmittelkonzentraten aus Treibmitteln und thermoplastischen nomatischen Polycarbonaten oder ABS-Polymerisaten mit Treibmittelgehalten von 5 bis 20 Gew:-%, bezogen auf das jeweilige Gesamtgewicht aus Thermoplast und Treibmittel, das dadurch gekennzeichnet, ist daß die Herstellung der Konzentrate unter Einsatz der Polycarbonate bzw. ABS-Polymerisate in Pulverform und unter Zusatz von 0,5 bis 30 Gew.-%, bezogen auf das jeweilige Gesamtgewicht von Polycarbonat bzw. ABS-Polymerisat und weiterem Stoff, eines weiteren Stoffes erfolgt, der einen Erweichungspunkt hat, welcher 20°C bis 200°C tiefer liegt als der des Polycarbonats bzw. des ABS-Polymerisats, und der aus niedermolekularem Polyethylen und/oder Polycaprolacton besteht.

Thermoplastische aromatische Polycarbonate im Sinne der vorliegenden Erfindung sind solche auf Basis von Diphenolen wie Resorcin, Hydrochinon, aus Dihydroxydiphenylen und insbesondere aus Bis - (hydroxyphenyl) - alkanen, wie beispielweise Bis - (4 - hydroxyphenyl) - propan - 2.2 (Bisphenol A), Bis - (4 - hydroxy - 3,5 - dimethylphenyl) - propan - 2.2, aus Dreikernbisphenolen wie $\alpha,\alpha'$ - Bis - (4 - hydroxyphenyl) - p - diisopropylbenzol, aus halogenierten Bis(hyhydroxyphenyl) - alkanen wie beispielsweise 4,4' - Dihydroxy - 3,5,3',5' - tetrachlordiphenylpropan - 2.2 oder 4,4' - Dihydroxy - 3,5,3',5' - tetrabrom - diphenyl - propan - 2.2, Bis - (hydroxyphenyl) - cycloalkanen, -sulfonen, -sulfoxiden, -ethern oder -sulfiden, gegebenenfalls im Gemisch mit Glykolen, mit Derivaten der Kohlensäure, beispielsweise ihren Diestern oder Dihalogeniden, gegebenenfalls unter Mitverwendung untergeordneter Mengen von Dicarbonsäuren oder deren für eine Esterbildung geeigneten Derivaten, hergestellt sind und die ein mittleres Molekulargewicht ($\overline{M}w$) von mindestens etwa 10 000, vorzugsweise von zwischen etwa 25 000 und etwa 200 000 besitzen, ermittelt durch Messungen der rel. Viskosität von $CH_2Cl_2$ bei 25°C und einer Konzentration von 0,5 Gew.-%.

Die aromatischen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, beispielsweise solchen mit drei oder mehr als dreiphenolischen Hydroxygruppen verzweigt sein.

Polycarbonate dieser Art sind z.B. in den deutschen Offenlegungsschriften 1 570 533, 1 595 762, 2 116 974, 2 113 347, der britischen Patentschrift 1 079 821, der US—Patentschrift 3 544 514 und in der deutschen Offenlegungsschrift 25 00 092 beschrieben.

Unter ABS-Polymerisaten im Sinne der vorliegenden Erfindung sind entweder ABS-Pfropfpolymerisate allein oder deren Mischungen mit Styrol-Acrylnitril-Copolymerisaten in Mengen von 30 Gew.-% bis 80 Gew.-%, bevorzugt 40 Gew.-% bis 70 Gew.-%, bezogen jeweils auf Gesamtmischung aus ABS-Pfropfpolymerisat und SAN-Copolymerisat zu verstehen.

In den Pfropfpolymerisaten ist auf einen Kautschuk eine Monomerenmischung von 95 bis 50 Gew.-% Styrol, Methylmethacrylat oder Mischungen daraus und 5 bis 50 Gew.-% Acrylnitril, Methylmethacrylat oder Mischungen daraus pfropfpolymerisiert. Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril, oder Copolymerisate von Butadien mit bis zu 20 Gew.-% eines niederen Alkylesters von Acryl- oder Methacrylsäure (z.B. Methylacrylat, Ethylacrylat, Methylmethacrylat und Ethylmethacrylat).

Das Gewichtsverhältnis von Kautschuk zu pfropfpolymerisierten Monomeren muß 85:15 bis 40:60 sein. Die Pfropfpolymerisate müssen in Form von Teilchen mit einem mittleren Durchmasser von 0,2 bis 5 μm bevorzugt 0,2 bis 1 μm vorliegen.

Solche Pfropfcopolymerisate sind bekannt. Sie werden z.B. hergestellt durch Polymerisation der Monomeren an radikalischen Katalysatoren in Anwesenheit eines Kautschuklatex. Die Größe der Kautschukteilchen in diesem Latex ist bevorzugt im Bereich von 0,2 bis 1 μm, weil durch das Pfropfpolymerisieren der Monomeren die Teilchen nicht wesentlich vergrößert werden.

Unter Styrol-Acrylnitril-Copolymerisaten, versteht man Copolymerisate aus 95 bis 50 Gew.-% Styrol, α-Methylstyrol, Methylmethacrylat oder Mischungen daraus mit 5 bis 50 Gew.-% Acrylnitril, Methacrylnitril, Methylmethacrylat oder Mischungen daraus. Solche Copolymeren entstehen häufig bei der Pfropfpolymerisation als Nebenprodukte besonders dann, wenn große Mengen Monomerer auf kleine Mengen Kautschuk gepfropft werden. Es ist dabei möglich, neben oder anstelle der so entstandenen Copolymeren noch getrennt hergestellte Copolymere dieser Art zuzumischen.

Nähere Einzelheiten siehe DE—B 2 259 565. Die erfindungsgemäß zu verwendenden Thermoplasten werden als Pulver eingesetzt.

Pulver im Sinne der vorliegenden Erfindung sind Körperchen, die eine Pulverkorngröße von maximal 1000 μm, bevorzugt von maximal 800 μm haben sollen.

Erfindungsgemäß geeignete weitere Stoffe, die einen Erweichungspunkt haben, der 20°C bis 200°C tiefer liegt als der der jeweils einzusetzenden Polycarbonate bzw. ABS-Polymerisate, sind vorzugsweise niedermolekulare Polyethylene mit einem mittleren Gewichtsmittelmolekulargewicht von $\overline{M}w$ 4000 bis 10 000 (gemessen nach der Lichtstreuungsmethode in Decalin bei 120°C) und/oder Polycaprolactone mit einer reduzierten Viskosität von 0,1 bis 1,5, insbesondere von 0,5 bis 0,9 (gemessen in Benzol bei 30°C) (s. dazu DE—A 2 622 412).

Die erfindungsgemäß einzusetzenden weiteren Stoffe niedermolekulares Polyethylen bzw. Polycaprolacton werden in Mengen von 0,5 Gew.-% bis 30 Gew.-% und bevorzugt zwischen 1 Gew.-% und 15 Gew.-%, bezogen auf das jeweilige Gesamtgewicht von Thermoplast und weiterem Stoff, eingesetzt, wobei diese weiteren Stoffe sowohl in Granulatform als auch in Pulverform eingesetzt werden können

Als Treibmittel für die Herstellung des Treibmittelkonzentrats sind die üblichen geeignet, vorzugsweise jedoch Isatosäureanhydrid und 5-Phenyltetrazol.

Derartige Treibmittel sind unter dem Handelsnamen Kem Tec 500 HP der Fa. Sherwin Williams Chemical Co und Expandex OX-5PT der Stephan Chemical Company erhältlich.

Die Treibmittel werden vorzugsweise ebenfalls in Pulverform eingesetzt.

Die Menge an Treibmittel zur Herstellung der Treibmittelkonzentrate liegen bei 5 bis 20 Gew.-%, vorzugsweise zwischen 10 und 15 Gew.-% bezogen auf das jeweilige Gesamtgewicht aus Thermoplast und Treibmittel.

Das meist bevorzugt hergestelle Treibmittelkonzentrat enthält jeweils zwischen 75 und 87 Gew.-% an Thermoplast, zwischen 1 und 10 Gew.-% an weiterem Stoff mit entsprechend niedrigerem Erweichungspunkt und zwischen 10 und 15 Gew.-% an Treibmittel.

Die erfindungsgemäße Herstellung der Treibmittelkonzentrate, d.h. der Dreiermischungen, kann in üblichen Mischaggregaten wie Einwellenschnecken und Zweiwellenschnecken und Knetern erfolgen, wobei die Mischungstemperaturen bei maximal 180°C liegen, in jedem Fall jedoch so niedrig, daß das anwesende Treibmittel thermisch nicht geschädigt wird.

Eine bevorzugte Herstellungsart für das Treibmittelkonzentrat besteht darin, daß man Thermoplast und den weiteren Stoff mit dem 20°C bis 200°C tiefer liegenden Erweichungspunkt vorab homogenisiert und das Treibmittel danach in einer zweiten Extrusionsstufe zugibt.

Beispiel 1
840 g eines Pulvers mit einer Korngröße von weniger als 500 μm aus Bisphenol-A-Poly-

carbonat mit einem Schmelzindex von etwa 12 g/10 min (gemäß ASTM D-1238) werden gemischt mit 10 g eines Pulvers aus oxidiertem, niedermolekularem Polyethylen mit einem Molekulargewicht $\overline{M}w$ (Gewichtsmittel) von 8000 und einem Schmelzpunkt von etwa 140°C und mit 150 g pulvrigem Isatosäureanhydrid als Treibmittel. Das Gemisch wurde über einen Einfülltrichter in einem 53 mm Doppelwellenextruder extrudiert bei einer Massetemperatur von etwa 180°C. Das erhaltene Extrudat war homogen und einheitlich im Aussehen und enthielt das Treibmittel in thermisch nicht geschädigter Form. Das granulierte Extrudat war ein ausgezeichnetes Treibmittelkonzentrat.

Beispiel 2 (Vergleichsbeispiel)

Beispiel 1 wurde wiederholt mit der Ausnahme, daß das Polycarbonat in Granulatform zudosiert worden ist. Das erhaltene Extrudat war weder homogen noch einheitlich, was auf eine unvollständige Vermischung der drei Komponenten bei 180°C schließen läßt.

Beispiel 3

750 g des in Beispiel 1 eingesetzten Polycarbonatpulvers wurden vermischt mit 100 g Polycaprolacton, das einen Schmelzpunkt von 60°C und Granulatform besaß, und mit 150 g pulvrigem Isatosäureanhydrid analog Beispiel 1 vermischt und extrudiert, allerdings bei einer Massetemperatur von etwa 160°C. Das erhaltene Extrudat war wiederum homogen und einheitlich im Aussehen.

Beispiel 4

800 g des in Beispiel 1 eingesetzten Polycarbonatpulvers wurden vermischt mit 100 g Polycaprolacton des Beispiels 3 und mit 100 g pulvrigem 5-Phenyltetrazol gemäß Beispiel 1 und wie dort beschrieben, allerdings bei einer Massetemperatur von 160°C, extrudiert.

Das erhaltene Extrudat war wiederum homogen und einheitlich im Aussehen.

Beispiel 5

Beispiel 1 wurde wiederholt mit dem Unterschied, daß die Extrusion bei einer Massetemperatur von 170°C in einem Extruder von Werner und Pfleiderer, Typ ZSK 53 durchgeführt wurde. Das erhaltene Extrudat war wiederum homogen und einheitlich im Aussehen.

Beispiel 6

Die mischung des Beispiels 4 wurde gemäß Beispiel 5 extrudiert, mit dem Unterschied, daß eine Massetemperatur von 165°C eingehalten wurde.

Das erhaltene Extrudat war wiederum homogen und einheitlich im Aussehen.

## Patentansprüche

1. Verfahren zur Herstellung von Treibmittelkonzentraten aus Treibmitteln und thermoplastischen aromatischen Polycarbonaten oder ABS-Polymerisaten mit Treibmittelgehalten von 5 bis 20 Gew.-%, bezogen auf das jeweilige Gesamtgewicht aus Thermoplast und Treibmittel, dadurch gekennzeichnet, daß die Herstellung der Konzentrate unter Einsatz der Polycarbonat bzw. ABS-Polymerisate in Pulverform und unter Zusatz von 0,5 bis 30 Gew.-%, bezogen auf das jeweilige Gesamtgewicht von Polycarbonat bzw. ABS-Polymerisat und weiterem Stoff, eines weiteren Stoffes erfolgt, der einen Erweichungspunkt hat, welcher 20°C bis 200°C tiefer liegt als der des Polycarbonats bzw. des ABS-Polymerisats, und der aus niedermolekularem Polyethylen und/oder Polycaprolacton besteht.

2. Verfahren gemäß Anspruch 1, dadurch gekennzeichnet, daß der weitere Stoff einen Erweichungspunkt hat, welcher 50°C bis 100°C tiefer liegt als der des Polycarbonats bzw. des ABS-Polymerisats.

3. Verfahren gemäß Ansprüchen 1 und 2, dadurch gekennzeichnet, daß die pulvrigen Polycarbonate bzw. ABS-Polymerisate eine Korngröße von maximal 1000 μm haben.

## Claims

1. Process for the production of blowing agent concentrates from blowing agents and thermoplastic aromatic polycarbonates or ABS polymers with blowing agent contents of 5 to 20% by weight, based in each case on the total weight of the thermoplastic and blowing agent, characterised in that the production of the concentrates is carried out using the polycarbonates or ABS polymers in powder form and with the addition of 0.5 to 30% by weight, based in each case on the total weight of polycarbonate or ABS polymer and the additional compound, of an additional compound which has a softening temperature 20°C to 200°C lower than that of the polycarbonate or of the ABS polymer and which consists of low molecular weight polyethylene and/or polycaprolactone.

2. Process according to Claim 1, characterised in that the additional compound has a softening temperature 50°C to 100°C lower than that of the polycarbonate or of the ABS polymer.

3. Process according to Claims 1 and 2, characterised in that the powdered polycarbonates or ABS polymers have a particle size of at most 1000 μm.

## Revendications

1. Procédé de préparation de concentrés d'agent gonflant à partir d'agents gonflants et de polycarbonates aromatiques thermoplastiques ou de polymères ABS à des teneurs en agent gonflant de 5 à 20% en poids, par rapport au poids total du thermoplaste et de l'agent gonflant, caractérisé en ce que la préparation des concentrés est réalisée avec utilisation des polycarbonates ou polymères ABS à l'état pulvérulent et avec adjonction de 0,5 à 30% en poids d'une autre substance qui présente un point de ramollissement inférieur de 20 à 200°C à celui du polycarbonate ou du polymère ABS, et qui consiste en polyéthylène à bas poids moléculaire et/ou polycaprolactone, par rapport au poids total du polycarbonate ou du polymère ABS et de l'autre substance.

2. Procédé selon la revendication 1, caractérisé en ce que l'autre substance présente un point de ramollissement inférieur de 50 à 100°C à celui du polycarbonate ou du polymère ABS.

3. Procédé selon les revendications 1 et 2, caractérisé en ce que les polycarbonates ou polymères ABS à l'état pulvérulent ont une dimension de grain de 1,000 $\mu$m au maximum.